# EUROPEAN PATENT APPLICATION

(11) **EP 4 459 768 A1**
(43) Date of publication of application: **06.11.2024**
(21) Application number: 22916696.2
(22) Date of filing: 27.12.2022
(51) Int. Cl.: H01M 50/289, H01M 10/04, H01M 50/264, H01M 50/204, H01M 10/623, H01M 10/625

(54) **RECHARGEABLE BATTERY MODULE**

(30) Priority: 30.12.2021 KR 20210193101
(71) Applicant: SAMSUNG SDI CO., LTD., Giheung-gu Yongin-si, Gyeonggi-do 17084 (KR)
(72) Inventor: LIM, Dooyong, Yongin-si, Gyeonggi-do 17084 (KR); PARK, Seongjoon, Yongin-si, Gyeonggi-do 17084 (KR); PARK, Gunyeob, Yongin-si, Gyeonggi-do 17084 (KR)
(74) Representative: Gulde & Partner
(86) International application number: PCT/KR2022/021384
(87) International publication number: WO 2023/128555

(57) **Abstract**

A rechargeable battery module according to the present disclosure includes a plurality of unit cells arranged and stacked in a first direction and electrically connected to each other, an end plate disposed adjacent to an outermost unit cell of the plurality of unit cells and supporting the plurality of unit cells, and a side plate extending long along the first direction and supporting the plurality of unit cells. The side plate includes a main body fixed to the plurality of unit cells by an adhesive provided between the side plate and each of the plurality of unit cells; and a position fixing member integrally extending from a first surface of the main body facing the plurality of unit cells and positioned between the plurality of unit cells. The position fixing member is disposed in a space between the plurality of unit cells, and the adhesive is in close contact with the position fixing member within the space between the plurality of unit cells to be positioned within the space between the plurality of unit cells.

## Description

### TECHNICAL FIELD

The present disclosure relates to a rechargeable battery module.

### BACKGROUND ART

A rechargeable battery is a battery that is repeatedly charged and discharged, unlike a primary battery. Small capacity rechargeable batteries are used in small portable electronic devices such as mobile phones, tablet computers, and laptop computers, while large capacity rechargeable batteries may be used as a power source for driving motors in hybrid vehicles and electric vehicles.

As seen in the example used in the small electronic devices, the rechargeable battery may be configured of unit cells, or as seen in the example used for motor driving, the rechargeable battery may be configured in a module state in which a plurality of unit cells are electrically connected, and in a pack state in which a plurality of these modules are connected again.

For example, a rechargeable battery module may be configured by arranging a plurality of unit cells in one direction. End plates may be disposed at both ends of the rechargeable battery module along the arrangement direction, and side plates may be disposed at both side surfaces thereof to fix a plurality of arranged unit cells.

In this case, the end plate and the side plate are required to be designed to be suitable for fastening structures configuring the rechargeable battery module so that the plurality of unit cells may be combined with each other and firmly fixed.

### DISCLOSURE

### TECHNICAL PROBLEM

An aspect of the present disclosure attempts to provide a rechargeable battery module designed so that side plates may be firmly attached to side surfaces of a plurality of unit cells stacked.

### TECHNICAL SOLUTION

An embodiment provides a rechargeable battery module including: a plurality of unit cells arranged and stacked in a first direction and electrically connected to each other, an end plate disposed adjacent to an outermost unit cell of the plurality of unit cells and supporting the plurality of unit cells, and a side plate extending long along the first direction and supporting the plurality of unit cells. The side plate includes a main body fixed to the plurality of unit cells by an adhesive provided between the side plate and each of the plurality of unit cells; and a position fixing member integrally extending from a first surface of the main body facing the plurality of unit cells and positioned between the plurality of unit cells. The position fixing member is disposed in a space between the plurality of unit cells, and the adhesive is in close contact with the position fixing member within the space between the plurality of unit cells to be positioned within the space between the plurality of unit cells.

The position fixing member may be configured as a protrusion by embossing.

At least one or more of the protrusions may be disposed between neighboring unit cells among the plurality of unit cells.

The adhesive may be in direct contact with neighboring unit cells among the plurality of unit cells.

When viewed in a second direction perpendicular to the first direction, the unit cell may be configured as a prismatic rechargeable battery of which corner portions are rounded, and the protrusion may be configured to have a shape in which a first curvature portion corresponding to a curvature of the corner portion is symmetrically disposed.

A first interval, which is an interval between a side surface of the unit cell and a main body of the side plate, may be the same as a second interval, which is an interval between the curvature portion of the corner portion of the unit cell and the first curvature portion of the protrusion.

The number of the plurality of unit cells may be sixteen, and the protrusion may be respectively interposed between the plurality of unit cells.

An insulating member may be respectively disposed between the plurality of unit cells.

The insulating member may be installed in an insulating frame, and the insulating frame may include a frame main body on which the insulating member is supported, and a fixing portion extending from an end portion of the frame main body to be disposed in a space between the plurality of unit cells and fixed to the position fixing member by the adhesive.

A first interval, which is an interval between a side surface of the unit cell and a main body of the side plate, may be the same as a third interval, which is an interval between a curvature portion of the fixing portion and the first curvature portion of the protrusion.

### ADVANTAGEOUS EFFECTS

In the manufacturing process of the rechargeable battery module according to the embodiment, when fixing the side plate to the plurality of unit cells using an adhesive, the position fixing member disposed on the side plate corresponding to between the unit cells may sufficiently push the adhesive into a space between the unit cells.

Accordingly, the adhesive may fix the plurality of unit cells and the side plate while maintaining a uniform thickness between the plurality of unit cells and the side plate. The fixing structure described above may serve as an element that may increase the performance of the rechargeable battery module by strengthening the rigidity of the rechargeable battery module.

### BRIEF DESCRIPTION OF THE DRAWINGS

FIG. 1 illustrates a partially exploded perspective view of a rechargeable battery module according to an embodiment.
FIG. 2 illustrates a perspective view of a rechargeable battery module according to an embodiment.
FIG. 3 illustrates a cross-sectional view of a portion of a rechargeable battery module according to an embodiment.
FIG. 4A to FIG. 4C illustrate processes in which a side plate is fixed to a plurality of unit cells during a manufacturing process of a rechargeable battery module according to an embodiment.
FIG. 5 illustrates a perspective view of a portion of a rechargeable battery module according to another embodiment.
FIG. 6 illustrates a plan cross-sectional view of a portion of a rechargeable battery module according to another embodiment.

### MODE FOR INVENTION

The present disclosure will be described more fully hereinafter with reference to the accompanying drawings, in which embodiments of the disclosure are shown. The drawings and description are to be regarded as illustrative in nature and not restrictive. Like reference numerals designate like elements throughout the specification. In addition, some constituent elements are exaggerated, omitted, or briefly illustrated in the added drawings, and sizes of the respective constituent elements do not reflect the actual sizes.

The accompanying drawings are provided only in order to allow embodiments disclosed in the present specification to be easily understood and are not to be interpreted as limiting the present disclosure, and it is to be understood that the present disclosure includes all modifications, equivalents, and substitutions without departing from the scope of the present disclosure.

Terms including an ordinal number, such as first, second, etc., may be used to describe various elements, but the elements are not limited by the terms. These terms are only used to differentiate one constituent element from another.

It will be understood that when an element such as a layer, film, region, area, or substrate is referred to as being "on" or "above" another element, it can be directly on the other element or intervening elements may also be present. In contrast, when an element is referred to as being "directly on" another element, there are no intervening elements present. Further, in the specification, the word "on" or "above" means disposed on or below the object portion, and does not necessarily mean disposed on the upper side of the object portion based on a gravitational direction.

Throughout the specification, it should be understood that the term "include", "comprise", "have", or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance. Unless explicitly described to the contrary, the word "comprise" and variations such as "comprises" or "comprising" will be understood to imply the inclusion of stated elements but not the exclusion of any other elements.

Further, throughout the specification, the phrase "in a plan view" or "on a plane" means viewing a target portion from the top, and the phrase "in a cross-sectional view" or "on a cross-section" means viewing a cross-section formed by vertically cutting a target portion from the side.

Furthermore, throughout the specification, "connected" does not only mean when two or more elements are directly connected, but also when two or more elements are indirectly connected through other elements, and when they are physically connected or electrically connected, and further, it may be referred to by different names depending on a position or function, and may also be referred to as a case in which respective parts that are substantially integrated are linked to each other.

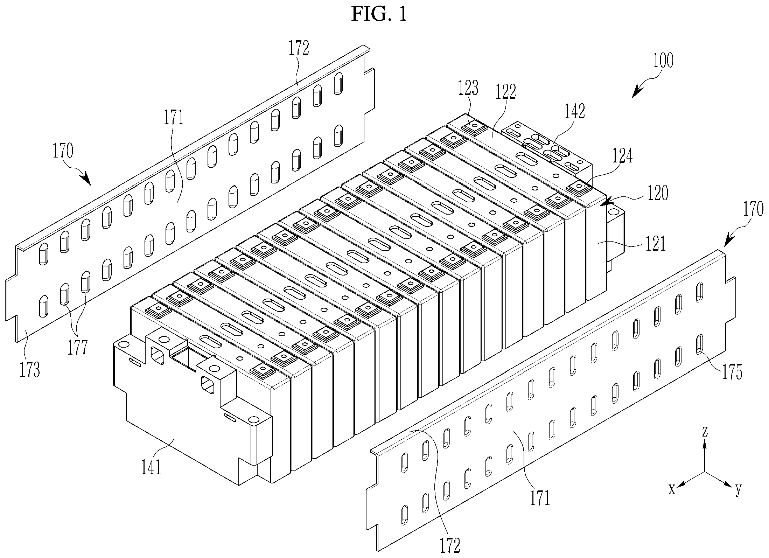

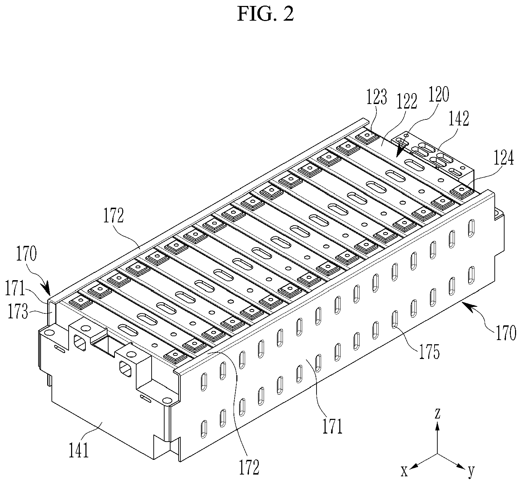

FIG. 1 illustrates a partially exploded perspective view of a rechargeable battery module according to an embodiment, and FIG. 2 illustrates a perspective view of a rechargeable battery module according to an embodiment.

Referring to FIG. 1 and FIG. 2, a rechargeable battery module 100 according to the present embodiment includes a plurality of unit cells 120, end plates 141 and 142 disposed adjacent to and outside the outermost unit cell 120, and side plates 170 disposed to support side surfaces of the plurality of unit cells 120.

The plurality of unit cells 120 may be arranged and stacked in a first direction (an x-axis direction in FIG. 1) and electrically and mechanically connected to each other. Each of the plurality of unit cells 120 may be formed of a prismatic rechargeable battery, and may be electrically connected through a bus bar (not shown).

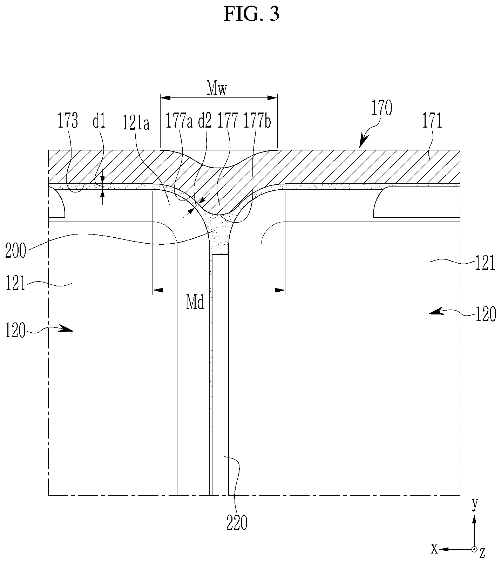

For example, the unit cell 120 may include a case 121 in which an electrode assembly is embedded, a cap plate 122 coupled to an opening of the case 121, and a first electrode terminal 123 and a second electrode terminal 124 installed in the cap plate 122. The first electrode terminal 123 may be a negative electrode terminal, and the second electrode terminal 124 can be a positive electrode terminal. The case 121 may have a rectangular parallelepiped shape in which a side surface having a wide width and a side surface having a narrow width are disposed opposite to each other. In addition, the case 121 may have a rounded corner (see FIG. 3) at each corner when viewed in a second direction (z-axis direction of FIG. 1) perpendicular to the first direction (x). However, the present disclosure is not limited to the unit cell structure described above.

The end plates 141 and 142 may support the plurality of unit cells 120 by pressing them in the first direction (x) while being in close contact with the outer surface of the outermost unit cell 120. In this case, the end plates 141 and 142 may be fixed to the outermost unit cell 120 by an adhesive.

The side plate 170 includes a plate-shaped main body 171 extending long in the first direction (x), and may be disposed to face both side surfaces of the unit cell 120 to support the side surfaces of the plurality of unit cells 120, for example, a side surface having a narrow width of the case 121 of the unit cell 120.

In the present embodiment, the main body 171 of the side plate 170 may partially protrude from both ends thereof in the first direction (x) to be connected to the end plates 141 and 142, and the upper end thereof may be bent inward to be fixed to the upper edge of the plurality of unit cells 120. A pair of side plates 170 may be provided, one on both side surfaces of the plurality of unit cells 120 having a narrow width.

As the length of the battery module increases and the volume ratio to the height of the unit cells 120 increases, the rigidity of the battery module may be reinforced by fixing the side plate 170 to the unit cell 120 through a fixing member such as an adhesive. That is, the side plate 170 may be pressed and fixed to the side surfaces of the plurality of unit cells 120 while the adhesive is applied to the side surface having a narrow width of each of the plurality of unit cells 120 along the first direction (x).

In this case, the side plate 170 may be coupled to the plurality of unit cells 120 in the correct position by a position fixing member 175 integrally extending from a first surface 173 of the main body 171.

In the present embodiment, the position fixing member 175 may be configured as a protrusion 177 by embossing. When the side plate 170 is fixed to the plurality of unit cells 120 by an adhesive, the protrusion 177 is disposed in the space between the plurality of unit cells 120, as shown in FIG. 3. The protrusion 177 may be previously formed in the main body 171 of the side plate 170 according to the interval between the plurality of unit cells 120 aligned along the first direction (x). For example, the protrusion 177 may be provided by embossing the main body 171 of the side plate 170 so that its center coincides with the center of the space between neighboring unit cells 120.

In the present embodiment, sixteen unit cells 120 are stacked, and the protrusions 177 may be disposed in two rows horizontally on the main body 171 of the side plate 170 so that they may be respectively disposed in the spaces between the plurality of unit cells 120. However, the arrangement of the position fixing members 175 in the present disclosure is not limited thereto. That is, the protrusion 177 may be provided on the main body 171 of the side plate 170 so that at least one or more of the plurality of unit cells 120 may be disposed between neighboring unit cells.

To further describe the protrusion 177 with reference to FIG. 3, the protrusion 177 may have a shape in which a first curvature portion 177a having a curvature corresponding to a curvature of a corner portion 121a of the case 121 of the unit cell 120 is disposed symmetrically when viewed in the second direction (z). Between both first curvature portions 177a, a second curvature portion 177b connecting them may be disposed.

A maximum width Mw of the protrusion 177 in the first direction (x) may be smaller than a maximum distance Md between the corner portions 121a of each of the adjacent battery cells 120, and a length of the protrusion 177 in the second direction (z) may be appropriately set in consideration of a height of the side plate 170.

When the side plate 170 is fixed to the plurality of unit battery cells 120, the protrusion 177 may be in close contact with the adhesive 200 provided in the space between the unit cells 120 so that the adhesive 200 may be filled in the space between the unit battery cells 120.

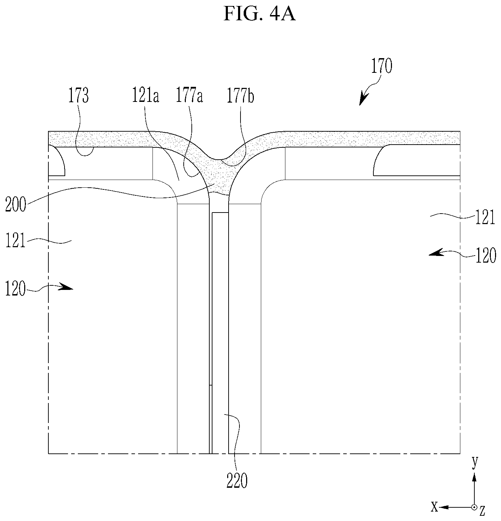

FIG. 4A to FIG. 4C illustrate processes in which the side plate 170 is fixed to the plurality of unit cells 120 during a manufacturing process of the rechargeable battery module 100.

As shown in FIG. 4A, first, the adhesive 200 is provided directly on a side surface having a narrow width of the cases 121 of the plurality of unit cells 120 along the first direction (x). In this case, the adhesive 200 is also positioned between the unit cells 120 due to its own viscosity, and maintains a state in which it is not completely filled in the space between the unit cells 120. An insulating member 220 may be disposed between the plurality of unit cells 120 to prevent an electrical short circuit thereof.

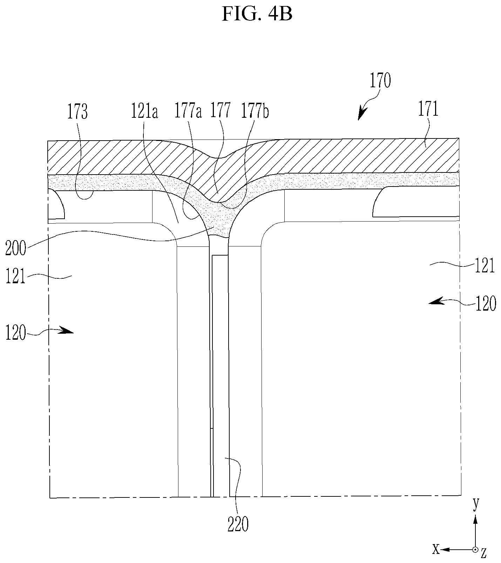

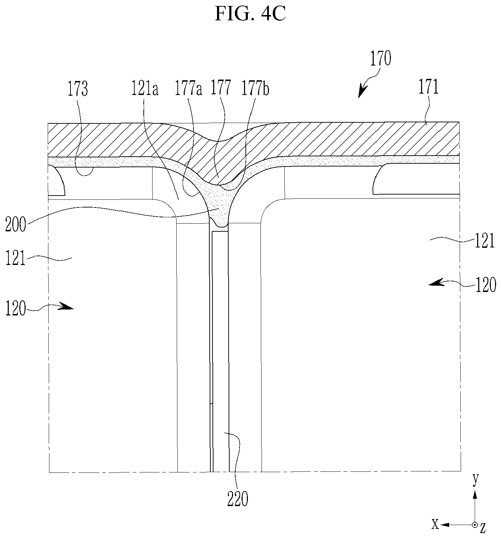

In this state, as shown in FIG. 4B, the side plate 170 is disposed so that the protrusion 177 faces the adhesive 200, and when the side plate 170 is pressed toward the plurality of unit cells 120, as shown in FIG. 4C, the protrusion 177 pushes a corresponding portion of the adhesive 200 positioned between the plurality of unit cells 120, allowing the corresponding portion of the adhesive 200 to be pushed into the space between the plurality of unit cells 120.

When the pressing of the side plate 170 with respect to the plurality of unit cells 120 is completed according to a predetermined process condition, as shown in FIG. 3, the corresponding portion of the adhesive 200 positioned between the plurality of unit cells 120 may be pushed by the protrusion 177 to a desired position, for example, a position where the adhesive 200 contacts the insulating member 220. Here, the first surface 173 of the main body 171 of the side plate 170 may be in close contact with and fixed to the adhesive 200 provided on the side surface having the narrow width of the cases 121 of the plurality of unit cells 120.

The pressing of the side plate 170 with respect to the plurality of unit cells 120 is preferably performed until a first distance d1 between the side surface having the narrow width of the case 121 of the unit cell 120 and the main body of the side plate and a second distance d2, which is a distance between a curvature portion of the corner portion 121a of the case 121 of the unit cell 120 and the first curvature portion 177a of the protrusion 177, become equal. The embossing for forming the protrusion 177 is preferably performed so that the relationship between the distances d1 and d2 may be set.

According to the present embodiment, when the side plate 170 is fixed to the plurality of unit cells 120, the position fixing member 175 provided on the side plate 170 may push the adhesive 120 positioned between the plurality of unit cells 120 to a desired position. Accordingly, the side plate 170 may be firmly fixed to the plurality of unit cells 120 by the adhesive 200 that directly contacts the corner as well as the side surface having the narrow width of the case 121 of the plurality of unit cells 120.

The fixing structure of the side plate 170 may prevent the plurality of battery cells 120 from moving along the arrangement direction thereof, that is, the first direction (x) in the rechargeable battery module 100.

In addition, it is advantageous in terms of automation of the manufacturing process because the side plate 170 may be designed and prepared in advance so that the position fixing member 175 of the side plate 170 may be inserted into the space between the unit cells 120.

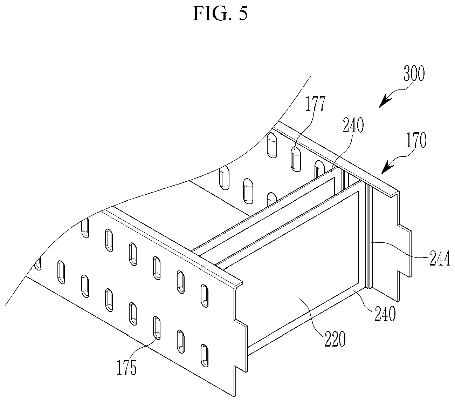

FIG. 5 schematically illustrates a perspective view of a rechargeable battery module 300 according to another embodiment of the present disclosure. The rechargeable battery module 300 according to another embodiment is substantially the same as the rechargeable battery module 100 according to the above-described embodiment. Therefore, for convenience, identical constituent elements are denoted by the same reference numerals.

In the rechargeable battery module 300 according to another embodiment, the insulating member 220 disposed between a plurality of unit cells (not shown for better understanding and ease of description) is installed in the insulating frame 240, and the protrusion 177, which is the position fixing member 175 of the side plate 170, is inserted into the fixing portion 244 integrally configured at both ends of the insulating frame 240 and fixed by the adhesive 200.

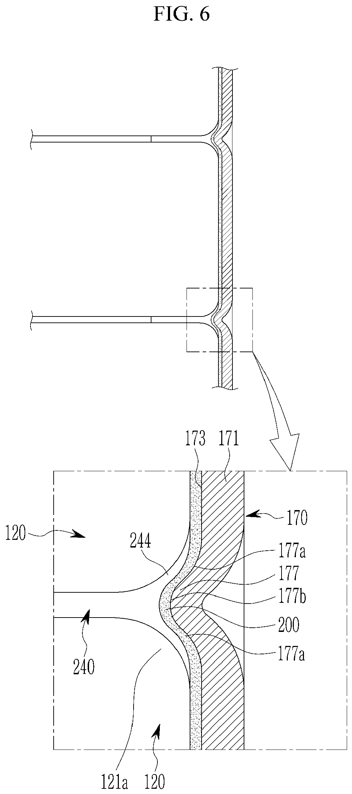

Here, as shown in FIG. 6, the fixing portion 244 may be disposed in the space between the plurality of unit cells 120, the inner surface (the surface facing the protrusion) thereof may have a curvature corresponding to the curvature of the first curvature portion 177a and the second curvature portions 177a and 177b of the protrusion 177, and the outer surface (the surface facing the unit cell) thereof may have a curvature corresponding to the curvature of the corner portion 121a of the case 121 of the unit cell 120.

When manufacturing the rechargeable battery module 300 of another embodiment, the side plate 170 may be fixed to the plurality of unit cells 120 by closely contacting the first surface 173 and the protrusion 177 of the main body 171 thereof to the adhesive 200 provided on the side surface having the narrow width of the case 121 of the plurality of unit cells 120 and provided on the inner surface of the fixing portion 244 of the insulating frame 240.

In the above embodiments, a rechargeable battery module including a prismatic rechargeable battery has been described as an example, but a battery module having a structure in which unit cells of various types and shapes are stacked and pressed and supported by end plates and side plates may be implemented by applying the characteristic structure of the present disclosure.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

- 100, 300:: rechargeable battery module
- 120:: unit cell
- 141, 142:: end plate
- 170:: side plate
- 171:: main body
- 175:: position fixing member
- 177:: protrusion
- 200:: adhesive
- 220:: insulating member
- 240:: insulating frame
- 244:: fixing portion

## Claims

1. A rechargeable battery module comprising:
a plurality of unit cells arranged and stacked in a first direction and electrically connected to each other;
an end plate disposed adjacent to an outermost unit cell of the plurality of unit cells and supporting the plurality of unit cells; and
a side plate extending long along the first direction and supporting the plurality of unit cells,
wherein the side plate comprises,
a main body fixed to the plurality of unit cells by an adhesive provided between the side plate and each of the plurality of unit cells; and
a position fixing member integrally extending from a first surface of the main body facing the plurality of unit cells and positioned between the plurality of unit cells, and
the position fixing member is disposed in a space between the plurality of unit cells, and
the adhesive is in close contact with the position fixing member within the space between the plurality of unit cells to be positioned within the space between the plurality of unit cells.

2. The rechargeable battery module as claimed in claim 1, wherein
the position fixing member is configured as a protrusion by embossing.

3. The rechargeable battery module as claimed in claim 2, wherein
at least one or more of the protrusions are disposed between neighboring unit cells among the plurality of unit cells.

4. The rechargeable battery module as claimed in claim 1, wherein
the adhesive is in direct contact with neighboring unit cells among the plurality of unit cells.

5. The rechargeable battery module as claimed in claim 2, wherein
when viewed in a second direction perpendicular to the first direction, the unit cell is configured as a prismatic rechargeable battery of which corner portions are rounded, and the protrusion is configured to have a shape in which a first curvature portion corresponding to a curvature of the corner portion is symmetrically disposed.

6. The rechargeable battery module as claimed in claim 5, wherein
a first interval, which is an interval between a side surface of the unit cell and the main body of the side plate, is the same as a second interval, which is an interval between a curvature portion of the corner portion of the unit cell and the first curvature portion of the protrusion.

7. The rechargeable battery module as claimed in claim 1, wherein
the number of the plurality of unit cells is sixteen, and the protrusion is respectively interposed between the plurality of unit cells.

8. The rechargeable battery module as claimed in claim 1, wherein
an insulating member is respectively disposed between the plurality of unit cells.

9. The rechargeable battery module as claimed in claim 8, wherein
the insulating member is installed in an insulating frame, and
the insulating frame comprises,
a frame main body on which the insulating member is supported; and
a fixing portion extending from an end portion of the frame main body to be disposed in a space between the plurality of unit cells and fixed to the position fixing member by the adhesive.

10. The rechargeable battery module as claimed in claim 9, wherein
the position fixing member is configured as a protrusion by embossing.

11. The rechargeable battery module as claimed in claim 10, wherein
when viewed in a second direction perpendicular to the first direction, the unit cell is configured as a prismatic rechargeable battery of which corner portions are rounded, and the protrusion is configured to have a shape in which a first curvature portion corresponding to a curvature of the corner portion is symmetrically disposed.

12. The rechargeable battery module as claimed in claim 11, wherein
a first interval, which is an interval between a side surface of the unit cell and a main body of the side plate, is the same as a third interval, which is an interval between a curvature portion of the fixing portion and the first curvature portion of the protrusion.
